# EUROPEAN PATENT APPLICATION

(11) **EP 2 684 457 A1**
(43) Date of publication of application: **15.01.2014**
(21) Application number: 13386021.3
(22) Date of filing: 09.07.2013
(51) Int. Cl.: A01P 13/00, A01N 65/00, A01N 65/22, A01N 25/14

(54) **Natural herbicide based on essential oils and formulated as wettable powder.**

(30) Priority: 13.07.2012 GR 20120100375
(71) Applicant: Symeonidou, Aikaterini, 64100 Amisiana Kavalas (GR); Petrotos, Konstantinos, 41222 Larisa (GR); Vasilakoglou, Ioannis, 57003 Thessaloniki (GR); Gkoutsidis, Paschalis, 41334 Larisa (GR); Karkanta, Fani, 41222 Larisa (GR); Lazaridou, Anastasia, 66100 Arkadiko Dramas (GR)
(72) Inventor: Symeonidou, Aikaterini, 64100 Amisiana Kavalas (GR); Petrotos, Konstantinos, 41222 Larisa (GR); Vasilakoglou, Ioannis, 57003 Thessaloniki (GR); Gkoutsidis, Paschalis, 41334 Larisa (GR); Karkanta, Fani, 41222 Larisa (GR); Lazaridou, Anastasia, 66100 Arkadiko Dramas (GR)

(57) **Abstract**

The invention refers to a natural herbicide with active ingredients naturally produced essential oils, either plain or in mixtures. Also, it refers to its production method which uses nanotechnology techniques and advanced encapsulation techniques by lyophilization as well as to the use of the finished product.

The composition of this natural herbicide is characterized by the basic component, which is either a plain naturally produced essential oil, or suitable combination of naturally produced essential oils, in combination with an encapsulation carrier, which by employing a suitable solvent are mixed, homogenized and lyophilized to result in the production of a wettable powder.

The produced wettable powder is dispersible in water and can be used for the weed control in various crops.

The key feature of the invention is the applicability of this natural herbicide in organic farming as well as in integrated agricultural production systems.

## Description

The invention refers to a natural herbicide with essential oils as active ingredients, either individually or in mixture, as well as to the production method using nanotechnology techniques and advanced lyophilization encapsulation techniques.

It is known from the literature that essential oils exhibit phytotoxic activity against important weeds such as pigweeds (*Amaranthus* spp.), common lambsquarters (*Chenopodium album*), barnyardgrass (*Echinochloa crus-galli*), foxtails (*Setaria* spp.), common purslane (*Portulaca oleracea*), velvetleaf (*Abutilon theophrasti*) and rigid ryegrass (*Lolium rigidum*)*.* In particular, the *in vitro* phytotoxic potential of essential oils against the previously mentioned weed species, as well as the mechanisms of action of essential oils have been investigated and proven in many experiments conducted by various researchers (Elakovich, 1988; Tworkoski, 2002; Singh et al., 2005; Bainard et al., 2006; Vasilakoglou et al., 2007; Dhima et al., 2010; Dayan et al., 2011). However, there are not sufficient data for the essential oil efficacy under field conditions, probably due to the problems posed by the direct application of essential oils in field using conventional sprayers. So, experimental data are mainly confined to *in vitro* experiments, which simply show the phytotoxic potential of the natural essential oils against weeds. This difficulty of evaluating essential oil efficacy in field condition is due to the fact that, during essential oil application, good mixing in water is required. This good mixing cannot be achieved because of the strong lipophilic character of essential oils. Furthermore, their high vapor pressure has as a result the reduced performance in field conditions. Both characteristics (strong lipophilic character and high vapor pressure) reduce essential oil penetration through leaf cuticle and consequently reduce their efficacy against weeds (Dudai et al., 1999; Isman, 2000).

The composition of the natural herbicide, according to the present invention, characterized by the basic component which is the naturally produced essential oils, alone or in suitable mixture, in combination with one encapsulation carrier which may be one of the means known in the art such as heat resistant modified starch, various types of maltodextrins, proteins, various polysaccharides, gelatin, polloulan, polyethylene oxide (PEO), similar water-soluble materials or suitable combination of them.

The production method suggested by the present invention consists of the following respective steps: i) the essential oil or mixture of essential oils are dissolved, in an amount of 3 to 6%, in liquid methanol or other suitable high purity organic solvent following by mixing to complete dissolution, ii) then, the encapsulation carrier, in the ratio of 3 parts encapsulation carrier for every 1 part of essential oil added, is dissolved in the liquid and is homogenized with vigorous stirring, iii) then, the final solution is converted into powder by using a special type of lyophilization device (freeze drying) with chamber temperature -120 °C and vacuum of 4 mm Hg.

The advantage of this invention is the fact that the natural essential oils became much more applicable and effective against weeds when they are pre- or post-emergence applied in field, because of their suitable encapsulation in a water-soluble carrier and in the form of very fine particles. The reasons of this greater efficacy are summarized in the following: i) the formulation is well dispersed in water, so that it can be applied by conventional field sprayers, ii) the encapsulated essential oils have significantly reduced losses by evaporation, iii) the essential oils can penetrate in greater amounts into leaf cuticle of the weeds resulting in better weed control because the surface tension of the particles is reduced, improving the dispersion over the weed plant tissues, as well as the small particles of the essential oil penetrate in greater amounts the cuticle and destroy the cell membranes. Moreover, a significant advantage of this invention is that it refers to a natural pesticide (herbicide), which is not harmful for the environment and the non-target organisms, as well as for the human health, as long as the naturally produced essential oils are considered to be safe products according to international literature (Isman, 2000; Tworkoski, 2002; Dayan et al., 2011). Therefore, the formulation described in this invention can be used in the organic farming as well as in the integrated agricultural production systems.

The preparation of a natural herbicide based on the oregano essential oil and formulated as wettable powder by using thermostable modified starch from waxy corn (waxy maize starch) as encapsulation carrier, is described here down as an indicative example:
In 600 ml of methanol we dilute 25 ml of natural oregano essential oil and we mix. Then, we add, under stirring, 75 g of starch and we stir until dissolution and homogenization. The homogenized mixture is then cooled for 40 min, followed by a second mixing and is lyophilized for 24 hours at -120 °C and pressure 4 mm Hg (vacuum). The product resulted is a free flowing powder with distinct oregano odor. This powder has been applied by a experimental precision sprayer (AZO sprayer) and its efficacy on four of the most important spring weeds (redroot pigweed, common lambsquarters, bristly foxtail and common purslane) in three rates (15, 30 and 60 kg ha⁻¹) has been evaluated with final result the excellent weed control by the two higher rates.

### Related literature

Bainard, D., M.B. Isman, and M.K. Upadhyaya. 2006. Phytotoxicity of clove oil and its primary constituent eugenol and the role of leaf epicuticular wax in the susceptibility to these essential oils. Weed Science 54:833-837.
Chaimovitsh, D., M. Abu-Abied, E. Behausov, B. Rubin, N. Dudai, and E. Sadot. 2010. Microtubules are an intracellular target of the plant terpene citral. Plant Journal 61:399-408.
Dayan, F.E., L. Howell, J.P Marais, D. Ferreira, and M. Koivunen. 2011. Manuka oil, a natural herbicide with preemergence activity. Weed Science 59:464-469.
Dhima, K., I. Vasilakoglou, V. Garane, Ch. Ritzoulis, V. Liannopoulou, and E. Panou-Philotheou. 2010. Competitiveness and essential oil phytotoxicity of seven annual aromatic plants. Weed Science 58:457-465.
Dudai, N., A. Poljakoff-Mayber, A.M. Mayer, E. Putievsky, and H.R. Lerner. 1999. Essential oils as allelochemicals and their potential use as bioherbicides. Journal of Chemical Ecology 25:1079-1089.
Elakovich, S.D. 1988. Terpenoids as models for new agrochemicals. Pages 250-261 in H. G. Cutler, ed. Biologically active natural products - potential use in agriculture. American Chemical Society, Washington, D.C.
Isman, B.M. 2000. Plant essential oils for pest and disease management. Crop Protection 19:603-608.
Singh, H.P., D.R. Batish, N. Setia, and R.K. Kohli. 2005. Herbicidal activity of volatile oils from Eucalyptus citriodora against Parthenium hysterophorus. Annals of Applied Biology 146:89-94.
Tworkoski, T. 2002. Herbicide effects of essential oils. Weed Science 50:425-431.
Vasilakoglou, I., K. Dhima, E. Wogiatzi, I. Eleftherohorinos, and A. Lithourgidis. 2007. Herbicidal potential of essential oils of oregano or marjoram (Origanum spp.) and basil (Ocimum basilicum) on Echinochloa crus-galli (L.) P. Beauv. and Chenopodium album L. weeds. Allelopathy Journal 20:297-306.

## Claims

1. Natural herbicide based on natural produced essential oils and formulated as wettable powder, which is **characterized by** the use of essential oil or the mixture of essential oils as the active ingredients, in combination with an encapsulation carrier.

2. The natural herbicide based on essential oils and formulated as wettable powder, according to claim 1, is **characterized by** the fact that the essential oils used are of plant origin.

3. The natural herbicide based on essential oils and formulated as wettable powder, according to claim 1, is **characterized by** the fact that the encapsulation carrier can be one of the means known in the art, such as heat-resistant modified starch, various types of maltodextrins, proteins, various polysaccharides, gelatin, polloulan, polyethylene oxide (PEO), similar water-soluble materials or suitable combination of them.

4. A production method of the natural herbicide based on essential oils and formulated as wettable powder which is **characterized by** dissolving the essential oil or mixture of essential oils in a solvent, then dissolving and homogenizing the encapsulation carrier in the initial solution and finally by lyophilization of the solution to obtain the powder, which is suitable for application in field.

5. The production method of the natural herbicide based on essential oils and formulated as wettable powder, according to claim 4, is **characterized by** dissolving the essential oil or the mixture of essential oils in a liquid solvent as methanol or other suitable organic solvent with high purity.

6. The production method of the natural herbicide based on essential oils and formulated as wettable powder, according to claims 4 and 5, is **characterized by** dissolving the encapsulation carrier in the essential oil - solvent solution.

7. The production method of the natural herbicide based on essential oils and formulated as wettable powder, according to claims 4, 5 and 6, is **characterized by** the lyophilization of the solution produced by mixing of the essential oils, the solvent and encapsulation carrier and the production of powder.

8. A natural herbicide based on essential oils and formulated as wettable powder, which is **characterized by** its use in crops for weed control.

9. The natural herbicide based on natural essential oils and formulated as wettable powder, according to claim 8, is **characterized by** its applicability in crops by using the conventional field sprayers.
